# EUROPEAN PATENT APPLICATION

(11) **EP 2 138 354 A2**
(43) Date of publication of application: **30.12.2009**
(21) Application number: 09163143.2
(22) Date of filing: 18.06.2009
(51) Int. Cl.: B60R 11/00

(54) **Coupling device for coupling and holding objects together, and an assembly for a vehicle and a coupling device**

(30) Priority: 18.06.2008 NL 2001699
(71) Applicant: Huiskes, Wilhelmus Jan Baptist Gerardus, 5243 RA Rosmalen (NL); Van Schadewijk, Antonius Franciscus, 5236 VG s'-Hertogenbosch (NL)
(72) Inventor: Huiskes, Wilhelmus Jan Baptist Gerardus, 5243 RA Rosmalen (NL); Van Schadewijk, Antonius Franciscus, 5236 VG s'-Hertogenbosch (NL)
(74) Representative: Ketelaars, Maarten F.J.M.

(57) **Abstract**

The invention relates to a coupling device for holding together at least a first and a second object. The coupling device comprises a housing that is provided with a vacuum attaching means for attaching the coupling device to the first object. The vacuum attaching means can be provided with an operating element for alternately bringing the vacuum attaching means into an operative and non-operative position. The coupling device further comprises a cord element for bridging at least a part of the distance between the first and the second object. A securing means can be provided at one end of the coupling device for attaching the coupling device to the second object. The coupling device can be used for retaining the rear boot lid of a vehicle in a certain position.

## Description

The invention relates to a coupling device for holding together at least a first and a second object.

A device as such is known in the prior art, for example in the form of a rope. The known device can be used to prevent an increase in the distance between two objects, and/or to connect two objects with each other. To this end, the device is attached to an object by a first end and to second object by a second end. In a specific application, the known device can be used to prevent the rear boot lid of a vehicle from opening beyond a certain opened position. This is particularly impractical if one or more large objects are to be transported in a boot, where these objects are so large that the boot space can no longer be closed. In order to prevent hazardous situations from occurring, a first end of the rope is tied with a knot to the locking part of the boot lid and the other end of the rope is attached to the locking part of the boot space. In this manner, the rear boot lid is tied to the boot space. When the lid tends to move further upwards, the rope will prevent this movement from occurring.

A drawback of this known device is that this is relatively difficult to fasten to both the rear boot lid and the boot space. A further disadvantage of the known device is that it is relatively difficult to fasten the two objects to each other at the correct and desired distance. The available space to which the device can be secured is relatively small. This makes it difficult to secure the known device, since laying a knot is relatively difficult. This also makes it relatively difficult to adjust the distance between the two objects.

In addition, securing the known device is relatively time-consuming. Notably, a considerable amount of attention needs to be paid to the securing method in order for the known device to be secured in a safe manner. Quite often, the known device also needs to be unraveled before it can be used. This may also be relatively time-consuming. In addition, it is relatively time-consuming to remove the known device. This is because the coupling is relatively difficult to detach.

It is therefore an object of the present invention to provide a coupling device which mitigates at least one of the above-mentioned drawbacks.

To this end, the invention provides a coupling device of the kind described above, wherein the coupling device comprises a housing that is provided with a vacuum attaching means. This vacuum attaching means, for example a suction cup, can be used to secure the coupling device to the first object. The vacuum attaching means is preferably provided with an operating element for alternately bringing the vacuum attaching means into an operative and non-operative position. The operating element can be arranged to increase the volume of the vacuum attaching means, in such a manner that the resulting vacuum ensures a firm attachment between the vacuum attaching means and the first object. In this manner, the firm attachment ensures a relatively safe connection. The operating element is preferably arranged to reduce the pressure in the vacuum attaching means when the vacuum attaching means is brought into an operative position. Accordingly, the coupling device can be connected almost undetachably to the first object.

The coupling device can be further provided with a flexible cord connected to the housing for bridging at least a part of the distance between the first and the second object. The flexible cord element can be a wire or a belt, for example, and can be used as a coupling means to connect the first object to the second object. The cord element is preferably arranged to absorb relatively large forces without the cord element breaking. A securing means can be provided at one end of the cord element for securing the coupling device to the second object.

The distance between the vacuum attaching means and the securing means can be adjustable. The length of the cord element may be adjustable. Said distance can be increased or reduced so that the first object can be coupled to the second object at any desirable distance. It is possible for the coupling device to be provided with a restraining element for securing a desired length of the distance between the vacuum attaching means and the securing means. The restraining element is arranged in order to restrain and secure the adjustable distance. In particular, the length of the cord element can be secured and held in position at a certain length. The restraining element, such as a buckle, for example, ensures that the cord element, such as a strap, can be secured at a certain length. The user can operate the restraining element and, accordingly, adjust and secure the length thereof.

In particular, the invention provides a restraining element which restricts the length of the cord element, in other words, a restraining element that prevents an increase in the length of the cord element. It is in this manner in particular that a device is obtained which is highly suitable for holding two objects at a maximum distance from each other, in particular a rear boot lid and a fixed part of the vehicle.

In a particular embodiment of the coupling device, said coupling device is arranged for securing at least a rear boot lid of a vehicle with a part of the vehicle located at some distance therefrom. The device according to the present invention can be used to prevent an upward movement of a rear boot lid of a vehicle, for example in the event a large object is to be transported in a boot space and the rear lid cannot be closed in its entirety. The object may be a large suitcase, for example, or long planks for example. In particular, to this end the vacuum attaching means is arranged in order to secure said coupling device to the rear boot lid. The vacuum attaching means ensures that the device is relatively easy to attach to the rear boot lid, for example, by securing this to the metal part of the rear boot lid. Attachment to a window of the lid is also possible. The operating element for the vacuum attaching means ensures that the attachment can be achieved relatively quickly. The attaching means can also be removed relatively quickly. The operating element also increases the force with which the vacuum attaching means can be attached to the first object.

The cord element can be used to secure the coupling device and securing means to another part of the vehicle. To this end, the flexible cord element can be arranged to bridge at least a part of the distance between the rear boot lid and the vehicle part.

The securing means is preferably arranged for securing the coupling device to the vehicle part. The coupling device is arranged so that, when in use, it can prevent an upward movement of the rear boot lid. The securing means, such as a hook, can be attached to a towing hook, for example. It is also possible to secure the device to the locking member of the boot space. In this manner, a connection can be easily achieved between two objects. In addition, the connection is relatively reliable and thus ensures that no unsafe situations can occur resulting from the separation of the securing means. In one embodiment the coupling device comprises a rotatable storage element. In one embodiment, the rotatable storage element is attached to the housing. The flexible cord element is connected to the rotatable storage element and can be stored therein. At least a portion of the cord element can be wound onto the rotatable storage element. The application of the rotatable storage element ensures that the cord element is relatively easy to store. Storage thereof can take place in a relatively orderly manner, for example by rolling up the cord element. This ensures that the cord element does not need to be unraveled before use, but can be easily removed from the storage element, for example, by unrolling the cord element therefrom.

It is possible that the storage element comprises a tensioning means for winding the cord element onto the storage element. Such an embodiment ensures that the cord element is relatively easy to store. In addition, the pre-tensioning means can ensure that a force is exerted which pushes the first object in the direction of the second object. In this manner, a rear boot lid is pushed in the direction of a closed position. The pre-tensioning also ensures that a tension is exerted on the cord element. The degree of pre-tensioning is preferably such, that any upward movements of the rear boot lid resulting from wind or bumps in the road, for example, are suppressed and/or prevented.

In one embodiment, the restraining element comprises a ratchet mechanism connected to the storage element. The ratchet mechanism has an operative position which prevents the cord element from being unwound from the storage element. This prevents an increase in the distance between the first and the second object. In addition, the ratchet mechanism can be brought into a non-operative position. When non-operative, this enables unwinding, in particular the further unwinding of the cord element from the storage element. In this manner the distance between the vacuum attaching means and the securing means can be adjusted and, in particular, be set to a maximum, which is particularly handy when securing the coupling device to the first and the second object.

It is possible that the restraining unit forms part of the storage element. The restraining unit is then arranged to bring the storage element into a non-rotatable position. The restraining unit prevents further rotation of the storage element, in particular the further unwinding of the cord element. In a more specific embodiment, the restraining unit is arranged to prevent any rotational movement of the storage element. This actually ensures that the cord element can not be wound or unwound. This is advantageous when the distance of the cord element is to be adjusted to a fixed distance.

In one embodiment, the rotatable storage element comprises a spool. The spool can be arranged rotatably about a central spindle. Such an embodiment is relatively inexpensive.

It is possible that the axial shaft of the spindle is arranged substantially in line with an axial axis of the vacuum attaching means. The storage element is then rotatable in a plane that lies parallel to a surface to which the vacuum attaching means can be attached. In this manner, the coupling device can be formed using a relatively small number of parts. Such an embodiment also ensures that the coupling device can be constructed in a relatively compact form.

Conversely, it is also possible that the axial shaft of the spindle is arranged substantially perpendicular to an axial axis of the vacuum attaching means. The storage element is then rotatable in a plane that lies perpendicular to a surface to which the vacuum attaching means is attachable. In this embodiment it is possible to align the storage element in such a manner that the cord element running from the storage element coincides with the axial axis of the vacuum attaching means. The point where the cord element detaches from the storage element can then coincide with the axial axis of the vacuum attaching means. This ensures that the forces exerted on the cord element are distributed correctly to the vacuum attaching means. This results in a relatively strong attachment of the coupling device.

The cord element is preferably an elongated member and in one embodiment can be formed by a tensioning cord. The tensioning cord, for example, can be a rope, a cord made from synthetic fibre, or a relatively flexible metal cord. Other metals or forms are, of course, also conceivable. The tensioning cord is relatively strong. In addition, the tensioning cord is relatively flexible and can therefore be easily stored on a coupling device with a rotatable storage element. Of course, other embodiments of a cord element, such as a tensioning belt, for example, are also conceivable.

In one embodiment the housing is provided with an upwardly extending frame. The rotatable storage element can be mounted to the frame. Such an embodiment is relatively compact. In addition, the frame ensures that the exerted forces can be correctly distributed to the vacuum attaching means. The frame also ensures that the forces are uniformly distributed in a correct manner.

It is possible that the frame is rotatable about an axial axis of the vacuum attaching means. This enables a vertically arranged rotatable storage element to be rotated about an axial axis of the vacuum attaching means. In this manner, the position of the separation point and the direction of separation of the cord element can be adjusted somewhat. This makes it faster and easier to attach the vacuum attaching means since the direction in which the cord element detaches from the storage element no longer needs to be taken into account. This is also because the rotatable frame can be arranged in such a manner that the cord element can be positioned in the direction of the second object.

In one embodiment of the invention, the securing means comprises a hook. A hook means is relatively inexpensive. It is also relatively easy to hook a hook means behind a second object. In addition, it is also possible that the hook means is used in conjunction with the cord element to form a loop or a knot, by guiding the cord element through the eyelet of the hook means. In this manner it is relatively simple for the coupling device to be connected to a towing hook, for example. The hook means can be a hook, for example, such as a carbine hook.

In another embodiment, the securing means comprises a vacuum attaching means. The vacuum attaching means can then be connected to an adjustable cord element to an additional vacuum attaching means. In this manner a first object is relatively easy, quick and safe to connect to a second object. In doing, this also enables a firm connection to be made with the second object.

In one embodiment of the invention, the vacuum attaching means comprises a suction cup. A suction cup is relatively inexpensive. In addition, a suction cup ensures a strong and reliable attachment. The connection is relatively easy to achieve but also relatively easy to detach, without causing damage to the object to which the suction cup is attached.

According to one aspect of the invention, an assembly for a vehicle and a coupling device is provided. The vehicle has a rear boot lid and a vehicle part positioned at a distance therefrom. The coupling device comprises a frame that is provided with a vacuum attaching means. The vacuum attaching means is preferably attached to the rear boot lid of the vehicle. The vacuum attaching means can be provided with an operating element for alternately bringing the vacuum attaching means into an operative and non-operative position of the vacuum attaching means. The frame can also be further connected to a cord element for bridging at least a part of the distance between the rear boot lid and the vehicle part. A securing means is preferably provided at one end of the cord element. The end of the cord element and preferably also the securing means is connected to the vehicle part. The coupling device is connected to the rear boot lid and the part of the vehicle in such a manner that this prevents an upward movement of the rear boot lid. The assembly for a vehicle and coupling device ensures that the rear boot lid of the vehicle, when not fully closed, is retained in a certain position in order to transport large objects in the boot space of the vehicle.

Preferably, the assembly is arranged in such a manner that it prevents the rear boot lid from moving upward direction when the vehicle moves. When the vehicle moves, particularly at high speeds, exceptionally large forces can be exerted on the coupling device as a result of wind or bumps in the road. The assembly according to the embodiment ensures that these forces can be withstood, in such a manner that this enables large objects to be safely transported.

The coupling device of the assembly can be arranged according to any of the previously described embodiments.

Several embodiments of the invention will be described hereinafter with reference to a description of the figures. In these figures:
Fig. 1 shows a view in perspective of a coupling device in an operative position;
Fig. 2 shows a front view of an embodiment of a coupling device;
Fig. 3 shows a side view of a coupling device according to the embodiment of Fig. 2;
Fig. 4 shows a front view of an embodiment of a coupling device;
Fig. 5 shows a front view of an embodiment of a coupling device;

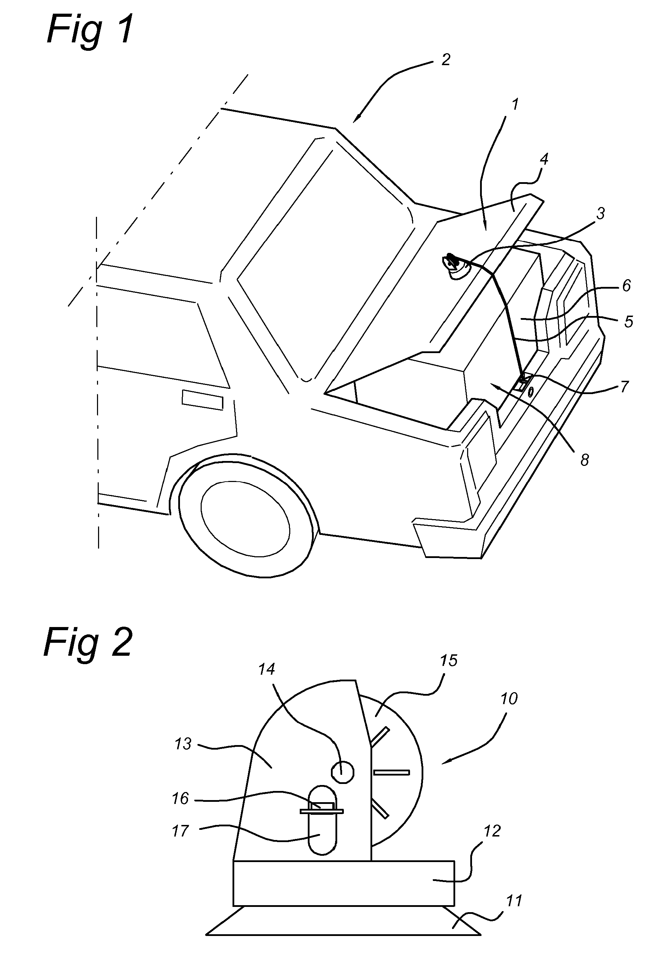

Fig. 1 shows an application of an embodiment of a coupling device 1 according to the present invention. The coupling device is connected to a rear boot lid 4 of a car 2 by means of a suction cup 3. A cord 5 runs from a suction cup, over the lid, in the direction of the locking means 7 of the rear boot lid 4. The end of the cord 5 is attached to the locking means 7. Of course, it is also possible for the end of the cord to be attached to a towing hook or to the underside of the rear bumper of the car.

When transporting large products, for example a large box 6 in a boot space 8 of a car 4, sometimes the rear boot lid 4 can not be fully closed. This may be the case, for example, when transporting large elements, such as planks. In these cases the boot lid 4 can move during transport, in particular rotate upwardly, which may lead to hazardous situations occurring. In the embodiment shown, the coupling device ensures that the boot lid 4 is secured to another part of the vehicle 2 so that the boot lid 4 can no longer move upwards. The device 1 can be connected to the boot lid 4 in such a manner that it is clamped down onto the box 6. This prevents the lid 4 from moving downwards, thus protecting the product 6 rom impulses from the lid 4.

Fig. 2 shows an embodiment of a coupling device 10 in more detail. The coupling device shown here has a suction cup 11. The suction cup is connected to a housing 12. A frame 13 is provided on the housing. The frame 13 and the housing 12 can be formed from one piece, for example, from a high-quality synthetic material. A shaft 14 with a rotatable spindle 15 is attached to the frame. An opening 17 is provided in the frame, through which a handle 16 extends.

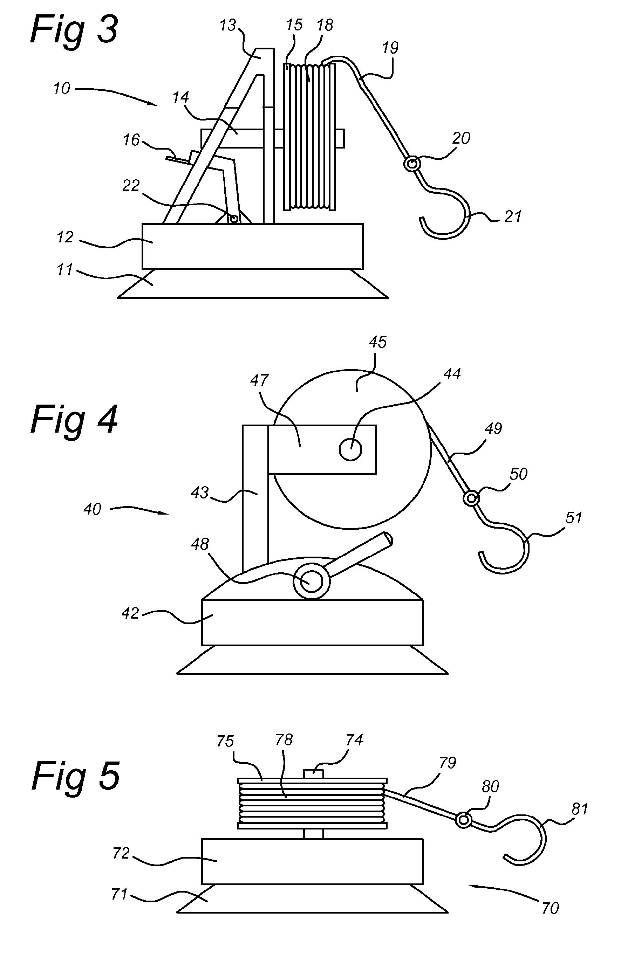

The coupling device 10 in Fig. 2 is shown in Fig. 3 in a different side view. Corresponding elements in Fig. 2 are indicated with the same numerals. As can be seen in Fig. 3, the coupling device 10 has a suction cup 11, which is connected with the cylindrical housing 12 mounted thereon. The A-shaped frame 13 extends upwardly. The handle extends outwardly from an opening 17. The handle is connected to a hinge 22 attached to the housing. The shaft 14 with the rotatable spindle 15 is mounted to the frame in close proximity to an axial axis of the suction cup. The spindle 15 comprises a spool 18 for cord 19. The end of the cord is provided with a hook 21 with an eyelet 20.

The operation of the embodiment shown in Fig. 2 and Fig. 3 of the coupling device is as follows. The coupling device 10 can be connected to a first object by the suction cup 11. The coupling device is attachable to a smooth surface by means of a vacuum force exerted on the underside of the suction cup 11. Examples of this may be a boot lid of a car, but also other objects, of course. After the coupling device 10 is connected to the first object, the first object can then be coupled to a second object. To this end, the cord 19 is rolled off of the spool 18 until the correct length of the cord 19 is obtained. The hook 21 can now be secured to the second object. The second object, for example, can be the locking mechanism of the boot lid of a car. The hook can also be attached to a towing hook of a vehicle. However, other applications are also conceivable.

In order to improve the suction force of the suction cup, the coupling device 11 is provided with a handle 16. By moving the handle 16, the space on the inside of the suction cup 11 is increased or decreased in order to either increase or decrease the suction force of the suction cup after positioning. The handle 16 is therefore also highly suitable for bringing the suction cup 11 into an operative or non-operative position. Other means for alternately bringing the suction cup into an operative of non-operative position are also conceivable. It is possible, for example, for a pressure valve to be mounted on the suction cup. In conjunction with the flexible nature of the suction cup, this also enables the pressure in the suction cup to be controlled. When the suction cup is pressed down, this releases air from the valve, thus forming a vacuum force. In this manner the suction cup can be made operative. The vacuum force can then be released by opening the valve in order to make the suction cup non-operative.

The spindle 15 can be provided with a stop (not shown). The stop ensures that the spindle 15 can no longer rotate so that the distance between the first object and the second object can not be increased. The stop can be a clamp, for example, which clamps against the underside of the roll. The stop can also be a rod element connected to the frame, which can be pressed into a lateral side of the spindle 15. Other means for preventing the unintentional roll-off of the cord from the spindle are also conceivable.

Fig. 4 shows another embodiment of a coupling device 40. The coupling device 40 comprises a housing 42 with a suction cup attached thereto. A handle 46 is provided on the housing, which can be moved about a hinge 48. The handle 46 is connected with a mechanism (not shown) for bringing the suction cup into an operative or non-operative position. On the upper side of the housing 42 a frame element 43 is provided which extends perpendicular thereto. A second frame element 47 is provided transversely on the frame element 43, onto which a shaft 44 and spindle 45 is mounted. A spool is mounted on the spindle with a cord 49. The end of the cord is provided with a hook 51 with an eyelet 50 connected to the cord 49.

Fig. 5 shows a further embodiment of a coupling device 70. An underside of a suction cup 71 is mounted on a housing 72 and a central shaft 74 extends upwardly from an upper side of the housing 72. A storage means 75 is mounted rotatably on the central shaft 74. The embodiment shown in Fig. 5 has a storage means mounted in a plane parallel to a surface onto which the suction cup can be attached. A cord 79 is wound onto the storage means 75 to form a spool 78. The end of the cord 79 is provided with a hook 81 with an eyelet 80. The cord 79 in this embodiment can be detached from the storage means in all directions. The rotatable storage means can be provided with a ratchet mechanism (not shown). The ratchet mechanism ensures that the storage means can only be moved in one rotational direction and that the other direction of rotation is restrained. Here, it is advantageous if the device is provided with a mechanism for releasing the restraint. In this manner, both directions of rotation can be used to unwind or wind the cord element. It can be advantageous when winding the cord element if the storage element is provided with a pre-tensioning means. The pre-tensioning means is arranged in such a manner this exerts torque for the purpose of rotating the storage element in a certain direction. The direction of rotation is preferably the rotational direction for winding up the cord element so that the cord element can be wound up automatically. A winding mechanism as such, with pre-tensioning means, is known to those skilled in the art and can be applied in a vacuum cleaner for winding up the electrical cord, or in a car seatbelt system for winding up and retaining a seatbelt in a stored position.

The suction cup can be provided in any desired shape or form. Accordingly, it is possible for the suction cup to be formed with or without an operating mechanism. The dimensions of the suction cup may also vary. The suction cup according to the present invention is chosen in such a manner that this ensures a firm adherence to the first object, for example a boot lid of a car. In addition, the suction cup is designed in such a manner that no scratches can be caused on the object to which the suction cup is attached. The suction cup forms part of the vacuum attaching means. It is also possible to use a different attaching means instead of the suction cup, without deviating from the scope of the rights requested in the accompanying claims.

The securing means can also be provided in any desired form, for example in the form of hook or a clamp. The securing means may also be a second vacuum attaching means, such as a suction cup, for example.

The application of the coupling device can be versatile. For example, the coupling device can also be quite readily used for forming a washing line, or for forming a line for attaching picture postcards thereto. The suction cup can also be attached to the roof of a car, for example, and the securing means can be secured to or around a tree. It is also possible to use the coupling device for hanging up various items. However, the coupling device according to the invention is preferably used for coupling a rear boot lid of a vehicle to another part of the vehicle, so that the rear boot lid can be securely retained in an extreme position. Of course, other applications are also conceivable.

The embodiments shown above are not intended to be restrictive. Of course, various combinations of the embodiments described and shown conceivable. It is possible, for example, to connect any desired form of a vacuum attaching means to a cord element. The cord element can be connected to the housing. When not in use, the cord element, for example a tensioning wire or tensioning cord, can be wound around the housing. In addition, it is also possible to attach a clamping mechanism to the housing, which is arranged in such a manner, that the cord element can not be unwound unintentionally.

It will be clear that the embodiments shown here are by no means intended to restrict the scope of the present invention. Many alternative embodiments are conceivable, without deviating from the scope of the rights requested in the claims.

## Claims

1. Coupling device (1) for coupling and holding together at least a first and a second object, wherein the coupling device (1) comprises a housing (12) that is provided with a vacuum attaching means (11) for connecting the coupling device (1) to the first object, wherein the vacuum attaching means (11) is provided with an operating means (16) for alternately bringing the vacuum attaching means (11) into an operative and non-operative position, wherein the operating means (16) is arranged to decrease the pressure in the vacuum attaching means (11) when the vacuum attaching means (11) is brought into an operative position for undetachably securing the coupling device (1) to the first object, wherein the coupling device is further provided with a flexible cord element (19) attached to the housing (12) for bridging at least a part of the distance between the first and the second object, wherein an end of the cord element (19) is provided with a securing means (21) for securing the coupling device to the second object, wherein the distance between said vacuum attaching means and said securing means is adjustable, and wherein said coupling device is provided with a restraining means for restraining the distance between said vacuum attaching means and said securing means at a desired maximum length.

2. Coupling device (1) according to claim 1, wherein the coupling device is further provided with a rotatable storage element, wherein the flexible cord element is connected to the storage element and wherein at least a portion of said cord element can be wound onto said rotatable storage element (15).

3. Coupling device (1) according to claim 2, wherein the storage element (15) comprises a pre-tensioning element for winding up the cord element (19).

4. Coupling device (1) according to claim 2 or 3, wherein said restraining element comprises a ratchet mechanism connected to the storage element, which can be brought into an operative position for preventing the unwinding of the cord element (19) from the storage element (15) and which can be brought into a non-operative position for permitting the unwinding of the cord element (19) from the storage element (15).

5. Coupling device (1) according to any of the preceding claims, wherein said coupling device is arranged for securing at least a rear boot lid of a vehicle with a part of the vehicle located at some distance therefrom, wherein the vacuum attaching means (11) is arranged in order to secure the coupling device (1) to the rear boot lid, wherein said flexible cord element can be arranged to bridge at least a part of the distance between the rear boot lid and the vehicle part, and wherein the securing means (21) is arranged for securing said coupling device to the vehicle part, wherein said coupling device is arranged so that, when in use, it can prevent an upward movement of the rear boot lid.

6. Coupling device according to any of the claims 2-5, wherein the rotatable storage element (15) comprises a spool (18) which is rotatable about a central spindle (14).

7. Coupling device according to claim 6, wherein an axial axis of the spindle (14) is mounted substantially in line with an axial axis of the vacuum attaching means (11).

8. Coupling device according to claim 6, wherein an axial axis of the spindle (14) is mounted substantially perpendicular to an axial axis of the vacuum attaching means (11).

9. Coupling device according to any of the preceding claims, wherein the cord element (19) comprises a tensioning cord (19).

10. Coupling device according to any of the preceding claims, wherein said housing is provided with an upwardly extending frame (13), wherein the storage element (15) is mounted to said frame.

11. Coupling device according to claim 10, wherein the frame (13) is rotatable about an axial axis of the vacuum attaching means (11).

12. Coupling device according to any of the preceding claims, wherein the securing means (21) comprises a hook element or second vacuum attaching means.

13. Assembly for a vehicle and a coupling device (1), wherein the vehicle comprises a rear boot lid and a vehicle part positioned at a distance therefrom, and wherein the coupling device (1) comprises a housing (12) that is provided with a vacuum attaching means (11) which is attached to the rear boot lid of the vehicle, wherein the vacuum attaching means (11) is provided with an operating means (16) for alternately bringing the vacuum attaching means (11) into an operative and non-operative position, wherein the housing (12) is further attached to a cord element (19) for bridging at least a part of the distance between the rear boot lid and the vehicle part, wherein an end of the cord element (19) is provided with a securing means (21) that is secured to the vehicle part, wherein the coupling device is connected to the rear boot lid and vehicle part in such a manner that this prevents an upward movement of the rear boot lid.

14. Assembly according to claim 13, wherein the coupling device is **characterized by** any of the claims 1-12.
